## Europäisches Patentamt
## European Patent Office
## Office européen des brevets

(11) Veröffentlichungsnummer: **0 262 289**
**B1**

(12) **EUROPÄISCHE PATENTSCHRIFT**

(45) Veröffentlichungstag der Patentschrift:
18.04.90

(51) Int. Cl.⁴: **A22B 3/08**

(21) Anmeldenummer: 87106151.1

(22) Anmeldetag: 28.04.87

(54) Tötungsvorrichtung für Geflügeltiere.

(43) Veröffentlichungstag der Anmeldung:
06.04.88 Patentblatt 88/14

(45) Bekanntmachung des Hinweises auf die Patenterteilung:
18.04.90 Patentblatt 90/16

(84) Benannte Vertragsstaaten:
AT BE CH DE ES FR GB GR IT LI LU NL SE

(56) Entgegenhaltungen:
WO-A-84/01690
DE-A- 1 905 983
GB-A- 2 095 535
NL-A- 7 500 030
NL-A- 7 904 602
NL-A- 7 904 779
US-A- 2 152 083
US-A- 3 765 055
US-A- 3 805 328
US-A- 4 249 285
US-A- 4 354 296

(73) Patentinhaber: STORK PMT B.V., Handelstraat 3,
NL-5831 AV Boxmeer(NL)

(72) Erfinder: Markert, Heinrich Willi, Onderlangs 17,
NL-6731 BK Otterlo(NL)

(74) Vertreter: Hansen, Bernd, Dr.rer.nat. et al, Hoffmann,
Eitle & Partner Patentanwälte
Arabellastrasse 4 Postfach 81 04 20,
D-8000 München 81(DE)

## Beschreibung

Die Erfindung bezieht sich auf eine Tötungsvorrichtung für an den Beinen, mit dem Kopf nach unten hängend, hintereinander geförderte Tiere, insbesondere Flügeltiere, wie Hähnchen, Puten etc., mit einer Fangeinrichtung zum Einfangen, Halten und Strecken des Halses durch Eingreifen des Kopfes und mit einer Schneideinrichtung insbesondere zum Durchtrennen der Halsschlagader gemäß dem Oberbegriff des Patentanspruchs 1. Eine derartige Vorrichtung ist aus der US-A 4 249 285 bekannt.

Derartige Vorrichtungen sind als linear arbeitende Töter bekannt, wobei natürlich die Tiere bereits betäubt sind, wenn sie in den Töter gelangen. Bei diesem bekannten Töter sind zwei in Längsrichtung aufeinander zulaufende Führungsstangen vorgesehen, die in Längsrichtung der Fördereinrichtung der Tiere ausgerichtet sind. Der Kopf des Tieres wird zwischen den Führungsstangen eingefangen und dann der Hals gestreckt, wonach dieser in den Bereich des Messers gelangt, das in den Hals eindringt, um die Halsschlagadern zu durchtrennen. Bei diesem bekannten Töter, bei dem verschiedene Fördersysteme zum Einsatz kommen, gelangen die Tiere in unregelmäßiger Ausrichtung, d.h. in unkontrollierter Ausrichtung zum Schneidmesser. Dies hat zur Folge, daß manchmal nur die Haut eingeschnitten wird, aber kein Durchtrennen der Halsschlagadern erfolgt. Dies wiederum hat ein ungenügendes Ausbluten der Tiere zur Folge, so daß solche Tiere vom Veterinärmediziner nicht abgenommen werden.

Die Tiere werden stets, wenn sie an den Beinen hängend gefördert werden, so gefördert, daß die Seite des Tieres, d.h. die Stelle, wo die Flügel sitzen, nach vorne bzw. nach hinten weist, wenn man die Bewegungsrichtung der Tiere betrachtet. Dies hat zur Folge, daß häufig ein Teil der Flügel von den Führungsstangen ebenfalls eingefangen und vom Schneidmesser erfaßt wird.

Zur Beseitigung dieser Nachteile besteht die Aufgabe der Erfindung darin, eine Tötungsvorrichtung der eingangs genannten Art zu schaffen, bei der die Tiere zuverlässig exakt zum Messer ausgerichtet werden können, mit der Folge, daß ein das übrige Tier schonendes zuverlässiges Durchschneiden der Halsschlagadern so durchführbar ist, daß ein vollständiges Ausbluten der Tiere gewährleistet ist.

Diese Aufgabe wird erfindungsgemäß durch die Merkmale des Patentanspruchs 1 gelöst.

Durch diese Anordnung wird der Hals des Tieres sicher vom Fangschlitz in einer bestimmten Vorausrichtung, vorzugsweise mit dem Rücken des Tieres in Richtung auf das geschlossene Ende des Fangschlitzes eingefangen, ohne daß eine Gefahr dahingehend besteht, daß Teile der Flügel in den Fangschlitz gelangen. Wenn die Halshalteeinrichtung den Hals des Tieres gegen das geschlossene Ende des Fangschlitzes drückt und der Fangschlitz in Richtung auf den Kopf, diesen erfassend, bewegt wird, so gelangt der Kopf in eine besondere Ausrichteeinrichtung dahingehend, daß zum Zeitpunkt des Einwirkens der Schneideinrichtung möglichst nahe am Kopf der entsprechende Halsbereich so auf das Messer sicher ausgerichtet ist, daß ein schonendes, aber sichergestellt wirksames Durchtrennen der Halsschlagader mit der Folge möglich ist, daß das Tier vollständig ausbluten kann.

Derartige Tötungsvorrichtungen sind bevorzugt in einer Vielzahl hintereinander in Reihe angeordnet, vorzugsweise in einer geschlossenen Reihe, wobei die Möglichkeit besteht, daß diese Tötungsvorrichtungen entweder in einem Linearbereich oder aber im Umlenkbereich (Karussellprinzip) tätig sind. Dabei ist das genannte Karussellprinzip bevorzugt, weil damit eine möglichst einfache, nockengesteuerte Zwangssteuerung der mechanisch bewegbaren Teile auf einfache Weise zu bewerkstelligen ist.

Damit ein sicheres Einfangen des Tierhalses dann, wenn das Tier durch den Förderer in den Bereich des Fangschlitzes gebracht wird, gewährleistet ist, verjüngt sich der Fangschlitz ausgehend vom offenen Ende zum geschlossenen Ende hin.

Die Kopfausrichteinrichtung besteht vorzugsweise aus einer unterhalb des geschlossenen Endes des Fangschlitzes befindlichen Ausnehmung in Form einer Rinne. Wenn insbesondere bei der Bewegung des Fangschlitzes nach unten der Kopf des Tieres in diese Ausnehmung gelangt, erfolgt eine exakte Ausrichtung des Kopfes und somit des zu schneidenden Halsbereiches im Verhältnis zu einem entweder feststehenden oder sich auf den Hals zu bewegenden Schneidmesser. Im Falle eines feststehenden, sich aber in Richtung des Tiereförderers mitbewegenden Schneidmessers wird der Hals des Tieres gegen das Messer gedrückt, so daß dadurch der Schneidvorgang während des Transportes der Tiere gewährleistet ist. Dies bedeutet also, daß der Tötungsvorgang mit den in Reihe angeordneten, sich mit dem Tiereförderer bewegenden Tötungsvorrichtungen kontinuierlich erfolgt.

Der Fangschlitz ist zwangsgesteuert bewegbar und dabei zur Anpassung an verschieden große Tiere frei von der Zwangssteuerung federbelastet oder gewichtsbelastet. Dies bedeutet, daß der Fangschlitz sich von der Zwangssteuerung befreien kann und aufgrund der Feder je nach der Größe des Tieres eine Einstellung außerhalb der Zwangssteuerung möglich ist.

Die Halshalteeinrichtung besteht vorzugsweise aus einem im wesentlichen U-förmigen Haltebügel, der so angeordnet ist, daß er in den Bereich oberhalb des Fangschlitzes, diesen überlappend, bewegbar ist.

Die Schneideinrichtung befindet sich vorzugsweise unterhalb dieses U-förmigen Haltebügels und ist zusammen mit diesem in Richtung auf den Hals bewegbar, wobei normalerweise die Rückseite des Halses und somit der Hinterkopf des Tieres auf das geschlossene Ende des Fangschlitzes zu gerichtet ist und die Schneideinrichtung an der Vorderseite des Halses möglichst nahe am Kopf des Tieres angreift.

Die Schneideinrichtung beinhaltet ein Schneidmesser, das vorzugsweise getrennt angetrieben, im wesentlichen linear auf den Hals des Tieres zu bewegbar ist. Vorteilhafterweise erfolgt der Antrieb des Schneidmessers pneumatisch derart, daß der Beginn des Schneidens und/oder die Schneidkraft und/oder die Schneidtiefe und/oder die Schneiddauer wunschgemäß eingestellt werden können, damit das Durchschneiden der Halsschlagadern genau in dem Moment erfolgt, wenn der Kopf bzw. der Hals des Tieres auf die gewünschte Weise genau ausgerichtet und sicher gehalten ist.

Das Schneidmesser selbst ist vorzugsweise V-förmig ausgerichtet, so daß sich die Schneidkanten in Richtung auf das Tier zu einander annähern. Bei großen Tieren ist es zur Vereinfachung der Herstellung vorgesehen, das Messer 2-teilig auszuführen. Dabei hat das Schneidmesser zwei außenliegende Schneidkanten zum Erfassen der beiden Halsschlagadern.

Um ein besseres Eindringen und Einschneiden des Messers in den Hals des Tieres zu gewährleisten, endet jede außenliegende Schneidkante des Schneidmessers in einer Spitze, wobei diese Spitzen quer zur Bewegungsrichtung des Schneidmessers im Abstand zueinander liegen. Zwischen diesen Spitzen befindet sich eine nach hinten versetzte, vorzugsweise ausgerundete Ausnehmung, deren Innenkanten zumindest teilweise eine weitere Schneidkante bilden, und zwar vorzugsweise derart, daß innen zu jeder Spitze eine innenliegende Schneidkante ausläuft, wobei dann der Grund der Ausnehmung stumpf sein kann. Vorzugsweise sind diese innenliegenden Schneidkanten höckerförmig so ausgebildet, daß sie sowohl zu den genannten Spitzen als auch zum Ausnehmungsgrund hin schräg auslaufen.

Vorzugsweise ist der Fangschlitz Teil eines linear bewegbaren Schlittens, in dem einerseits auch die Kopfausrichtausnehmung ausgebildet ist und an den ein Schwenkhebel angelenkt ist, der die Halshalteeinrichtung und/oder die Schneideinrichtung trägt.

Damit ein sicheres Halten des Halses einerseits und eine Anpassung an verschieden große Tiere andererseits möglich sind, ist die Halshalteeinrichtung bzw. der diese bildende U-förmige Bügel federnd gehalten.

Weitere Einzelheiten, Merkmale und Vorteile der Erfindung ergeben sich aus der nachfolgenden Beschreibung der in den Zeichnungen rein schematisch dargestellten Ausführungsbeispiele.

Es zeigt:

Fig. 1 eine schematische Seitenansicht einer Tötungsvorrichtung mit dem eingefädelten Hals eines Geflügeltieres,
Fig. 2 eine rein schematische Darstellung eines Maschinenkarussells,
Fig. 3 eine Seitenansicht der Tötungsvorrichtung der Fig. I in der Schneidstellung,
Fig. 4 eine Draufsicht auf einen den Fangschlitz bildenden Schlitten,
Fig. 5 eine Teilansicht des Haltebügels der Halshalteeinrichtung, und
Fig. 6 eine Draufsicht auf das Schneidmessers im Verhältnis zum Hals des Geflügeltieres.

Die hier rein beispielsweise beschriebene Tötungsvorrichtung arbeitet in einem kontinuierlichen Betrieb zusammen mit einem vorzugsweise als Hängeförderer ausgebildeten Fördermittel zum kontinuierlichen Heranbringen von an den Füßen mit dem Kopf nach unten hängenden Tieren, die zuvor betäubt worden sind.

Derartige Tötungsvorrichtungen, wie sie nachfolgend im einzelnen beschrieben werden, sind vorzugsweise in einer geschlossenen Reihe angeordnet und bewegen sich zumindest im Arbeitsbereich mit derselben Geschwindigkeit wie das vorgenannte Hängefördermittel (Tiereförderer). Dabei besteht die Möglichkeit, die Tötungsvorrichtungen in einem Linearbewegungsbereich dieser Umlaufbahn wirksam werden zu lassen oder aber in einem Umlenkbereich. Bevorzugt ist hier das Anordnen der Tötungsvorrichtungen nach dem Karussellbetrieb derart, daß die Tötungsvorrichtungen auf einer Kreisbahn um eine vertikal ausgerichtete Achse sich bewegend angeordnet sind, wobei der Tiereförderer so ausgerichtet ist, daß er auf einem bestimmten Kreisumfangsbereich des Karussells zu und dann wieder von diesem Bereich wegbewegt wird, so daß die hängenden Tiere in diesem bestimmten Umfangsbereich durch die sich mitbewegenden Tötungsvorrichtungen bearbeitet werden können.

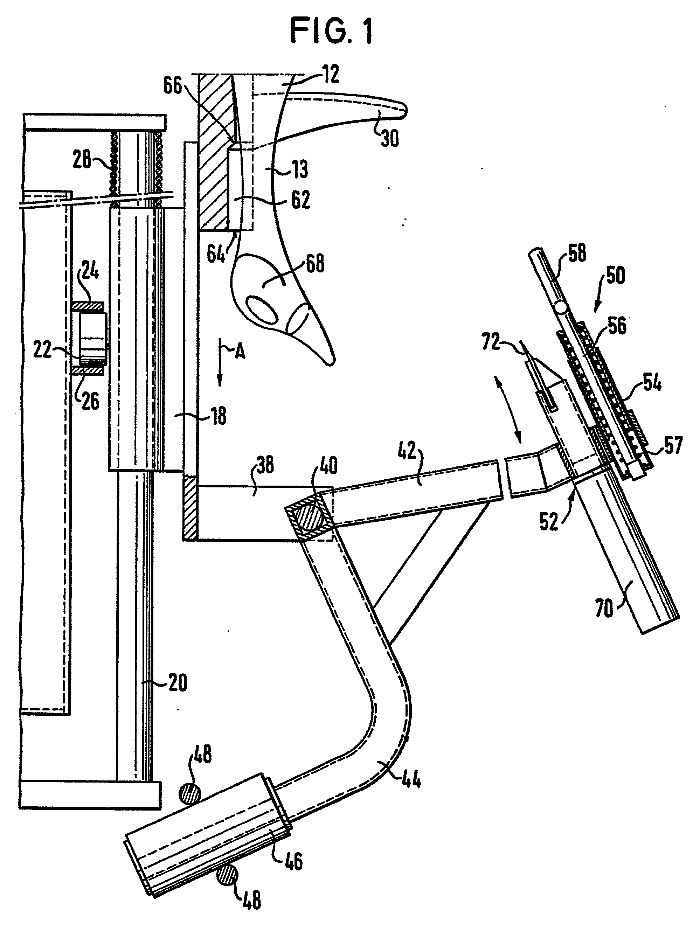

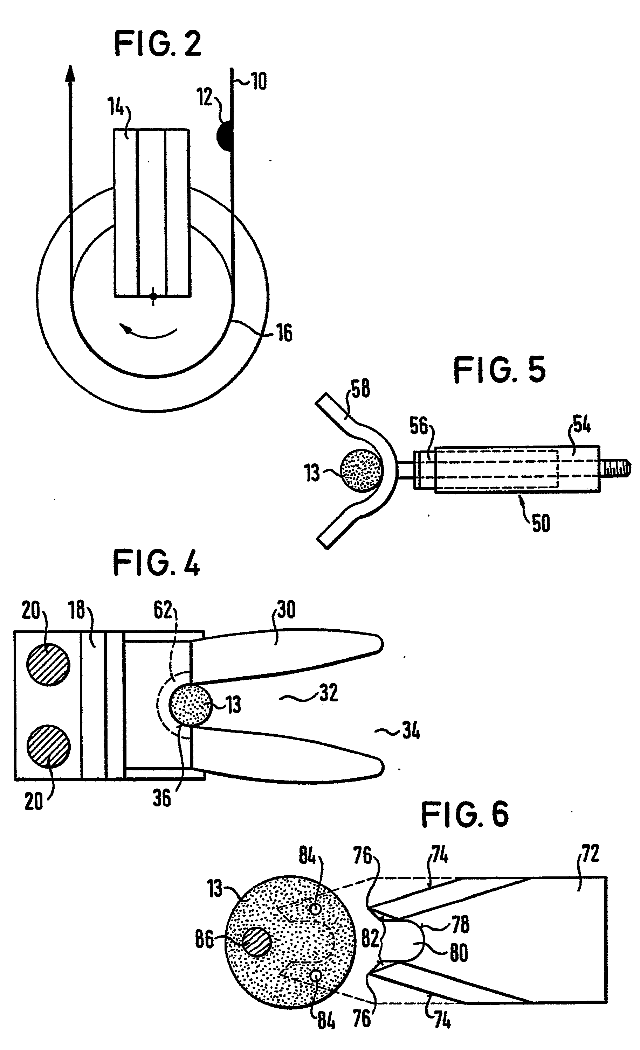

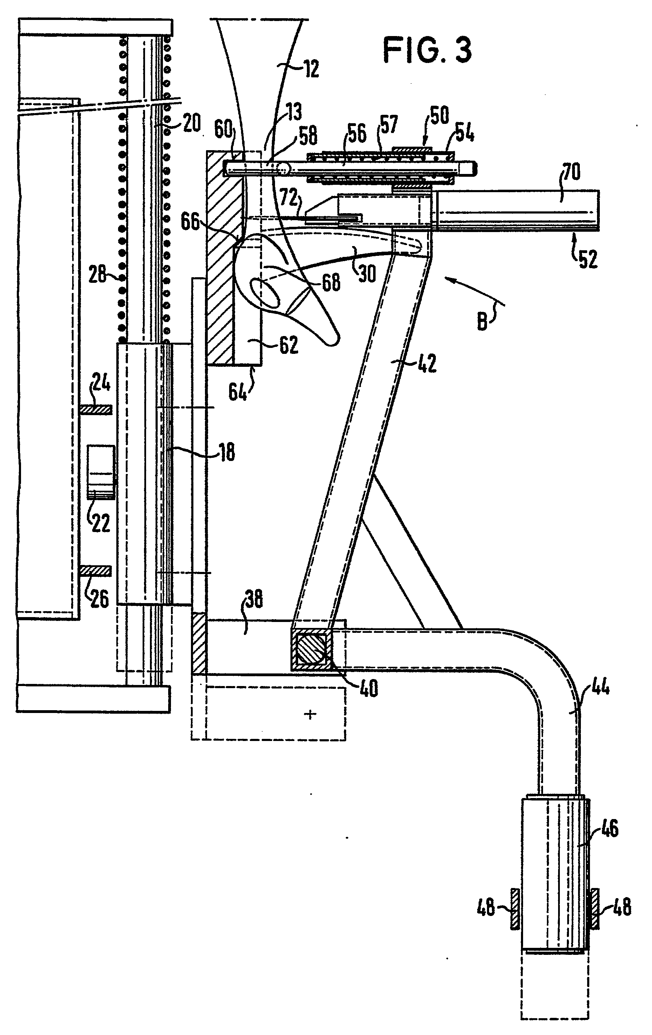

Ein derartiger Karuselltyp ist rein schematisch in Fig. 2 dargestellt und zwar als rechtsdrehendes Modell. In Fig. 2 ist der Hängeförderer (Tiereförderer) mit dem Bezugszeichen (10) versehen. Die Tiere (12) werden normalerweise so gefördert, daß sie mit dem Rücken nach innen weisend ausgerichtet sind. Mit dem Bezugszeichen (14) ist ein Ständer bezeichnet, der eine nicht näher erkennbare vertikale Drehachse hält. Auf der schematisch dargestellten Kreisbahn (16) sind die sich auf dieser Kreisbahn bewegenden, in einem bestimmten Abstand zueinander angeordneten Tötungsvorrichtungen angeordnet, wie sie in Fig. 1 und 3 dargestellt sind.

Nunmehr soll im einzelnen die Tötungsvorrichtung anhand von Fig. 1 und 3 beschrieben werden.

Ein Schlitten (18) ist im wesentlichen in vertikaler Richtung entlang von zwei Führungsstangen (20) angeordnet. Die Bewegung des Schlittens (18) erfolgt über eine Nockenzwangssteuerung. Diese Nockenzwangssteuerung besteht aus einer am Schlitten (18) befindlichen Rolle (22) sowie zwei feststehende Nockenbahnen (24 und 26), die auf einer kreisförmigen Bahn um die nicht-dargestellte senkrechte Achse des Karussells angeordnet sind. Dabei ist die Führung der Nockenbahnen so, daß eine zeitlich abgestimmte Bewegung des Schlittens im Verhältnis zu den anderen Teilen der Tötungsvorrichtung erfolgt. Wie Fig. 3 zeigt, liegen in einem unteren Bereich die Nockenbahnen (24 und 26) weiter auseinander, so daß die Rolle (22) weder mit der einen noch mit der anderen Nockenbahn in Berührung steht. Dies hat den Zweck, daß in diesem Bereich eine auf den Schlitten wirkende Feder (28) so wirksam werden kann, daß der Schlitten über die noch zu beschreibende weitere Ausgestaltung entsprechend Fig. 3 in Anpassung an verschiedene Tiergrößen auf den Kopf des Tieres einwirken kann, ohne daß dies durch eine der Nockenbahnen in diesem Zustand behindert wird.

Am oberen Ende des Schlittens (18) befindet sich ein Fangbügel (30), der einen aus Fig. 4 ersichtlichen Fangschlitz (32) bildet. Dieser Fangschlitz weist ein breiteres offenes Ende (34) und ein engeres geschlossenes Ende (36), hier mit einer Ausrundung auf, so daß sich der Fangschlitz (32) in Fig. 4 von rechts nach links verjüngt. Dies fördert ein besseres Einfangen des in Fig. 4 schematisch dargestellten Halses (13) des Tieres (12).

Am unteren Ende des Schlittens (18) befindet sich ein Vorsprung (38), an dem über eine Achse (40) ein Schwenkhebel (42) angelenkt ist. Fest verbunden mit diesem Schwenkhebel (42) ist ein Steuerhebel (44) mit einer am freien Ende befindlichen Nockenfolgerolle (46). Diese Nockenfolgerolle (46) bewegt sich zwischen zwei in gleichem Abstand befindlichen Nockenbahnen (48), die feststehend und so konstruktiv ausgestaltet sind, daß bei der sich bewegenden Tötungsvorrichtung der Schwenkhebel (42) zeitlich und örtlich auf die auf eine vorbestimmte Weise gesteuert bewegt wird. Am freien Ende des Schwenkhebels (42) befindet sich in Kombinationsanordnung eine Halshalteeinrichtung (50) und eine Schneideinrichtung (52). Beide sind in einem geeigneten Abstand voneinander angeordnet, so daß entsprechend der Darstellung in Fig. 3 an der gewünschten Stelle die Halsschlagadern durchtrennt werden können.

Die Halshalteeinrichtung ist in Fig. 5 im einzelnen dargestellt und besteht aus einem zylindrischen Gehäuse (54), wie dies aus Fig. 1 und insbesondere aus Fig 5 ersichtlich ist. In diesem Zylinder (54) bewegt sich ein Kolben (56), der durch eine Feder (58) gemäß der Darstellung in Fig. 5 nach links vorgespannt wird, d.h. in Richtung auf den Hals (13) des Tieres. Natürlich ist der Kolben so am Zylinder gehalten, daß er nicht völlig aus dem Zylinder herausgestoßen wird. Allerdings besteht die Möglichkeit, daß sich der Kolben gegen die Federkraft um einen bestimmten Betrag in das Innere des Zylinders bewegen kann, um so in Anpassung an verschieden große Hälse ein sicheres Festhalten des Halses des Tieres gewährleisten zu können. Zum Erfassen des Halses ist am freien Ende des Kolbens (56) ein geöffneter, im wesentlichen U-förmiger Haltebügel (58) angebracht.

Oberhalb des Fangbügels (30) ist eine Rastausnehmung (60) ausgebildet, in die die freien Enden des U-förmigen Haltebügels (58) in der in Fig. 3 dargestellten Endstellung einrasten können. Unmittelbar unterhalb des Fangschlitzes (32) befindet sich im Schlitten (18) eine Kopfausrichtausnehmung (62), die an die Kopfform des Tieres angepaßt ist. Diese Rastausnehmung ist am unteren Ende bei (64) offen und weist am oberen Ende eine Schulter oder Stufe (66) auf.

Ebenso wie die Kopfausrichtausnehmung (62) an den Kopf des Tieres angepaßt ist, ist das geschlossene innere Ende (36) mit seiner Ausrundung an den Hals (13) angepaßt. Dadurch liegt entsprechend der in Fig. 3 dargestellten Schneidstellung des Tieres der Kopf (68) an der Schulter (66) an und ist in der Ausnehmung (62) (Rinne) liegend genau ausgerichtet und zur Schneideinrichtung positioniert. In dieser Stellung wird der Hals durch den Haltebügel (58) sicher gehalten, so daß ein exaktes und schonendes Durchtrennen der Halsschlagadern und dadurch ein sicheres Ausbluten gewährleistet ist.

Die Schneideinrichtung (52) besteht aus einem pneumatischen Zylinder (70), der ein Schneidmesser (72) vorzugsweise linear antreibt. Dabei ist die pneumatische Steuerung derart v orzunehmen, daß der Beginn des Schneidens und/oder die Schneidkraft und/oder die Schneidtiefe und/oder die Schneiddauer, d.h. das Verbleiben des Messers im Hals, wunschgemäß und entsprechend den Anforderungen gesteuert werden können.

Die Anordnung ist so getroffen, daß der Hinterkopf des Vogels entsprechend der Darstellung in Fig. 3 so in der Ausrichtausnehmung (62) zu liegen kommt, daß das Schneidmesser (72) möglichst nahe am Hals an der Vorderseite einschneidet, um sicher die Halsschlagadern zu erfassen.

Es besteht grundsätzlich auch die Möglichkeit, und dies ist durch die Ansprüche erfaßt, den Vogel um 180° gedreht festzulegen, wobei natürlich die Ausrichtvorrichtungen entsprechend angepaßt werden müssen. Im Zusammenhang damit kann das Messer feststehend angeordnet sein und eine gesonderte Drückvorrichtung den ausgerichteten Hals in Richtung auf das Messer bewegen.

Das Schneidmeser (72) hat die in Fig. 6 in vergrößertem Maßstab dargestellte Form. An der in Schneidrichtung vorderen Seite läuft das Schneidmesser (72) konisch verjüngend zu und weist zwei äußere Schneidkanten (74) auf. Diese laufen jeweils in eine Spitze (76) aus, die quer zur Bewegungsrichtung in einem bestimmten Abstand zueinander liegen. Zwischen den Spitzen (76) befindet sich eine zurückverlaufende, eine Rundung (78) aufweisende Ausnehmung (80), die im Bereich der Ausrundung (78) stumpf ist, aber weiter vorne im Bereich der Spitzen (76) höckerförmige Schneiden (82) aufweist. Die äußeren Schneidkanten (74) dienen zum Durchtrennen der Halsschlagadern (84) und die höckerförmigen Schneiden (82) erleichtern das Eindringen des Schneidmessers in den Hals (13) des Tieres. Die Ausnehmung hat weiterhin den Vorteil, daß bei einem gegebenenfalls notwendigen weiteren Eindringen in den Hals des Tieres keine Berührung mit dem Halswirbel (86) zustandekommt. Auch eine Berührung mit Luft- und Speiseröhre soll vermieden werden, da später ein leichteres Entfernen der Innereien möglich ist. Der Eindringzustand des Messers in den Hals (13) des Tieres ist gestrichelt in Fig. 6 dargestellt.

Nachfolgend soll nunmehr die Funktionsweise der Tötungsvorrichtung beschrieben werden.

Wenn sich ein Tier mit dem Kopf nach unten hängend zusammen mit dem Tiereförderer in Richtung auf die Kreisbahn (16) bewegt, so erfolgt automatisch ein Einfädeln des Halses (13) des Tieres (12) in den sich auf einer Kreisbahn bewegenden, radial nach außen hin sich erstreckenden und öffnenden Fangschlitz (32) des Fangbügels (30) derart, daß das sich seitlich vorbewegende Tier mit dem Rücken zum geschlossenen Ende (36) des Fangschlitzes (32) bewegt. Dann erfolgt ohne oder gegebenenfalls zugleich mit einer Bewegung des Schlittens (18) in Richtung des Pfeiles A in Fig. 1 ein Schwenken des Schwenkhebels (42) im Gegenuhrzeigersinn in Richtung des Pfeiles B in Fig. 3 derart, daß der Haltebügel (58) durch einen Überlappungsvorgang oberhalb des Fangbügels (30) das offene Ende (34) des Fangschlitzes (32) schließt, so daß der Hals (13) des Tieres (12) nicht mehr ausfädeln kann. Sodann bewegt sich einerseits der Haltebügel (58) weiter in die in Fig. 3 dargestellte Endstellung, in der die freien Enden des Haltebügels (58) in die Rastausnehmungen (60) eingreifen, wobei sich der Haltebügel (58) durch die Feder (54) an verschiedene Halsdicken anpaßt Andererseits erfolgt ein Weiterbewegen des Schlittens (18) in Richtung des Pfeiles A nach unten. Der zuvor gemäß Fig. 1 außerhalb der Ausrichtausnehmung (62) befindliche Kopf (68) des Tieres kann sich bei dem Nachuntenbewegen der Ausrichtausnehmung (62) in Richtung des Pfeiles A mit dem hinteren Teil in das offene Ende (64) der Ausrichtausnehmung (62) schieben, bis der Hinterkopf an der Schulter (66) zur Anlage kommt. Dabei erfolgt ein genaues Ausrichten des Kopfes und des Halses und ein Strecken des Halses, so daß in einer gespannten Lage des Halses der Kopf genau ausgerichtet ist, was nacheinander zuverlässig für jedes Tier automatisch erfolgt. Diese Ausrichtung ist im Verhältnis zum Schneidmesser (72) stets dieselbe, da sich das Schneidmesser am sich bewegenden Schlitten (18) befindet. Durch die Beabstandung der Nockenbahnen (24) und (26) (Fig. 3) und die Einwirkung der Feder (28) hat der Schlitten (18) einen in Fig. 3 gestrichelt dargestellten Bewegungsspielraum, der sicherstellt, daß auch bei unterschiedlich großen Tieren die in Fig. 3 dargestellte Kopflage sichergestellt ist.

In Fig. 3 ist das vorgeschobene Schneidmesser (72) gestrichelt dargestellt und es ist erkennbar, daß das Messer stets nahe des Kopfes immer an derselben Stelle auf günstige Weise angreift.

Wenn der Schneidvorgang beendet ist, schwenkt der Schwenkhebel (42) wieder in die in Fig. 1 dargestellte Ausgangslage zurück und bei der weiteren Kreisbewegung der Tötungsvorrichtung und einem Entfernen vom Tiereförderer erfolgt automatisch das Ausfädeln des Tieres aus dem Fangschlitz.

**Patentansprüche**

1. Tötungsvorrichtung für an den Beinen, mit dem Kopf nach unten hängend, hintereinander geförderte Tiere, insbesondere Geflügeltiere, wie Hähnchen, Puten etc., mit einer Fangeinrichtung zum Einfangen, Halten und Strecken des Halses durch Ergreifen des Kopfes, und mit einer Schneideinrichtung insbesondere zum Durchtrennen der Halsschlagadern, wobei die Fangeinrichtung aus einem im wesentlichen quer zur Förder- und Bewegungsrichtung ausgerichteten, an einem Ende (36) geschlossenen und am anderen Ende (34) offenen, sich mit dem Tiereförderer bewegbaren Fangschlitz (32) besteht, und wobei eine Halshalteeinrichtung (50, 58) vorgesehen ist, mit der der Hals (13) des Tieres (12) gegen das geschlossene Ende (36) des Fangschlitzes (32) drückbar ist, und wobei an dem geschlossenen Ende des Fangschlitzes (32) eine Kopfausrichteinrichtung (62, 66) vorgesehen ist, dadurch gekennzeichnet, daß die Halshalteeinrichtung (50, 58) auf den Fangschlitz zu und von diesem weg bewegbar ist, daß der Fangschlitz (32) in Körperlängsrichtung des hängenden Tieres (12) bewegbar angeordnet ist und daß die Schneideinrichtung (52) in Förderrichtung und zusammen mit der Halshalteeinrichtung bewegbar ist.

2. Tötungsvorrichtung nach Anspruch 1, dadurch gekennzeichnet, daß mehrere dieser Vorrichtungen linear oder auf einer gekrümmten Bahn in Reihe hintereinander angeordnet sind.

3. Tötungsvorrichtung nach Anspruch 2, dadurch gekennzeichnet, daß mehrere dieser Vorrichtungen auf einer Kreisbahn (16) rotierend angeordnet sind.

4. Tötungsvorrichtung nach einem der Ansprüche 1 bis 3, dadurch gekennzeichnet, daß der Fangschlitz (32) sich, ausgehend vom offenen Ende (34) zum geschlossenen Ende (36) hin, verjüngt.

5. Tötungsvorrichtung nach einem der Ansprüche 1 bis 4, dadurch gekennzeichnet, daß unterhalb des geschlossenen Endes (36) des Fangschlitzes (32) eine die Kopfausrichteinrichtung bildende Ausnehmung (62) ausgebildet ist.

6. Tötungsvorrichtung nach einem der Ansprüche 1 bis 5, dadurch gekennzeichnet, daß der Fangschlitz (32) zwangsgesteuert bewegbar und dabei zur Anpassung an verschieden große Tiere frei von der Zwangssteuerung (22, 24, 26) federbelastet (28) ist.

7. Tötungsvorrichtung nach einem der Ansprüche 1 bis 6, dadurch gekennzeichnet, daß die Halshalteeinrichtung (50) mit einem im wesentlichen U-förmigen Haltebügel (80) oberhalb des Fangschlitzes (32), diesen überlappend, bewegbar ist.

8. Tötungsvorrichtung nach Anspruch 7, dadurch gekennzeichnet, daß die Schneideinrichtung (52) unterhalb des Haltebügels (58) angeordnet und zusammen mit diesem bewegbar ist.

9. Tötungsvorrichtung nach Anspruch 8, dadurch gekennzeichnet, daß die Schneideinrichtung (52) ein Schneidmesser (72) beinhaltet, das getrennt angetrieben im wesentlichen linear bewegbar ist.

10. Tötungsvorrichtung nach Anspruch 9, dadurch gekennzeichnet, daß das Schneidmesser (72) pneumatisch angetrieben ist.

11. Tötungsvorrichtung nach einem der Ansprüche 1 bis 10, dadurch gekennzeichnet, daß das Schneidmesser (72) V-förmig ausgebildet ist und dabei zwei außenliegende Schneidkanten (74) hat.

12. Tötungsvorrichtung nach Anspruch 11, dadurch gekennzeichnet, daß jede außenliegende Schneidkante (74) des Schneidmessers (72) in einer Spitze (76) endet, daß diese Spitzen (76) quer zur Bewegungsrichtung des Schneidmessers (72) im Abstand zueinander liegen und zwischen sich eine nach hinten versetzte Ausnehmung (80) bilden, deren Innenkanten zumindest teilweise eine weitere Schneidkante (82) bilden.

13. Tötungsvorrichtung nach einem der Ansprüche 1 bis 12, dadurch gekennzeichnet, daß der Fangschlitz (32) Teil eines linear bewegbaren Schlittens ist, in dem einerseits auch die Kopfausrichtausnehmung (62, 66) ausgebildet ist, und an dem ein Schwenkhebel (42) angelenkt ist, der die Halshalteeinrichtung (50) und/oder die Schneideinrichtung (52) trägt.

14. Tötungsvorrichtung nach einem der Ansprüche 1 bis 13, dadurch **gekennzeichnet,** daß die Halshalteeinrichtung (50) federnd (54) gehalten ist.

15. Tötungsvorrichtung nach einem der Ansprüche 1 bis 14, dadurch **gekennzeichnet,** daß die Halshalteeinrichtung (50) in einer Halteendstellung in einer Rastausnehmung (60) eines den Fangschlitz (32) bildenden Bauteils einrastet.

**Claims**

1. Killing device for animals conveyed one behind the other by the legs with the head hanging downwards, in particular for poultry such as chickens, turkeys, etc., with a catching arrangement for catching, holding and stretching of the neck by engaging the head and with a cutting arrangement particularly for severing of the carotid arteries, the catching device comprising a catching slot (32) aligned substantially transversely of the conveying and movement direction, closed at one end (36) and open at the other end (34) and movable with the animal conveyor, and a neck-holding arrangement (50, 58) being provided with which the neck (13) of the animal (12) can be pushed against the closed end (36) of the catching slot (32), and a head-aligning arrangement (62, 66) being provided at the closed end of the catching slot (32), characterized in that the neck-holding arrangement (50, 58) is movable towards and away from the catching slot, in that the catching slot (32) is arranged to be movable in the longitudinal body direction of the hanging animal (12) and in that the cutting arrangement (52) is movable in the conveying direction together with the neck holding arrangement.

2. Killing device according to claim 1, characterized in that several of these devices are arranged linearly or in a curved path in a row behind each other.

3. Killing device according to claim 2, characterized in that several of these devices are rotatably arranged on a circular path (16).

4. Killing device according to any one of claims 1 to 3, characterized in that the catching slot (32) tapers from the open end (34) towards the closed end (36).

5. Killing device according to any one of claims 1 to 4, characterized in that below the closed end (36) of the catching slot (32) is provided a recess (67) forming the head aligning arrangement.

6. Killing device according to any one of claims 1 to 5, characterized in that the catching slot (32) is movable under positive control and is spring biassed (28) for adaption to variously sized animals, free from the positive control (22, 24, 26).

7. Killing device according to any one of claims 1 to 6, characterized in that the neck-holding arrangement (50) is movable together with a substantially U-shaped retaining yoke (58) above the catching slot (32), whilst overlapping the catching slot (32).

8. Killing device according to claim 7, characterized in that the cutting arrangement (52) is arranged beneath the retaining bar (58) and is movable together therewith.

9. Killing device according to claim 8, characterized in that the cutting arrangement (52) includes a cutting blade (72), separately driven, which is movable substantially linearly.

10. Killing device according to claim 9, characterized in that the cutting blade (72) is pneumatically driven.

11. Killing device according to any one of claims 1 to 10, characterized in that the cutting blade (72) is formed with a V-shape and has two external cutting edges (74).

12. Killing device according to claim 11, characterized in that each external cutting edge (74) of the cutting blade (72) ends in a point (76), in that these points (76) lie transversely of the direction of motion of the cutting blade (72) at a clearance from one another and form therebetween a rearwardly offset recess (80) whose inner edges at least partially form a further cutting edge (82).

13. Killing device according to any one of claims 1 to 12, characterized in that the catching slot (32) is part of a linearly movable carriage, in which the head-aligning recess (62, 66) is also formed, and on which a pivot lever (42) is pivoted, which carries the neck-holding arrangement (50) and/or the cutting arrangement (52).

14. Killing device according to any one of the claims 1 to 13, characterized in that the neck-holding arrangement (50) is resiliently (54) supported.

15. Killing device according to any one of claims 1 to 14, characterized in that the neck-holding arrangement (50) engages in a holding end position in a locking recess (60) of a component forming the catching slot (32).

**Revendications**

1. Dispositif d'abattage d'animaux transportés les uns derrière les autres par les pattes, la tête en bas, en particulier de volailles, telles que des poulets, des dindes, etc., comprenant un dispositif de capture destiné à capturer, à maintenir et à étirer le cou en saisissant la tête, et un dispositif de coupe en particulier pour couper les carotides, le dispositif de capture étant composé d'une fente de capture (32) qui est orientée pour l'essentiel transversalement à la direction de transport et de déplacement, est fermée à une extrémité (36) et est ouverte à l'autre extrémité (34) et peut être déplacée avec le convoyeur d'animaux, et un dispositif de maintien du cou (50, 58) étant prévu à l'aide duquel le cou (13) de l'animal (12) peut être pressé contre l'extrémité fermée (36) de la fente de capture (32), et un dispositif d'ajustage de la tête (62, 66) étant prévu à l'extrémité fermée de la fente de capture (32), caractérisé en ce que le dispositif de maintien du cou (50, 58) peut être déplacé vers la fente de capture et être éloigné de ladite fente, en ce que la fente de capture (32) est disposée mobile dans la direction longitudinale du corps de l'animal accroché (12) et en ce que le dispositif de coupe (52) est mobile dans la direction de transport et avec le dispositif de maintien du cou.

2. Dispositif d'abattage selon la revendication 1, caractérisé en ce que plusieurs de ces dispositifs sont disposés en file les uns derrière les autres sur une droite ou sur une voie courbe.

3. Dispositif d'abattage selon la revendication 2, caractérisé en ce que plusieurs de ces dispositifs sont disposés tournant sur une trajectoire circulaire (16).

4. Dispositif d'abattage selon l'une des revendications 1 à 3, caractérisé en ce que la fente de capture (32) se rétrécit à partir de l'extrémité ouverte (34) en allant vers l'extrémité fermée (36).

5. Dispositif d'abattage selon l'une des revendications 1 à 4, caractérisé en ce qu'un évidement (62) formant le dispositif d'ajustage de la tête est réalisé sous l'extrémité fermée (36) de la fente de capture (32).

6. Dispositif d'abattage selon l'une des revendications 1 à 5, caractérisé en ce que la fente de capture (32) peut être déplacée par une commande forcée et en outre est sollicitée par un ressort (28), libérée de la commande forcée (22, 24, 26), pour s'adapter à des animaux de tailles différentes.

7. Dispositif d'abattage selon l'une des revendications 1 à 6, caractérisé en ce que le dispositif de maintien du cou (50) avec un étrier de maintien (58) pour l'essentiel en U peut être placé au-dessus de la fente de capture (32) en recouvrant cette dernière.

8. Dispositif d'abattage selon la revendication 7, caractérisé en ce que le dispositif de coupe (52) est disposé sous l'étrier de maintien (58) et peut être déplacé avec ce dernier.

9. Dispositif d'abattage selon la revendication 8, caractérisé en ce que le dispositif de coupe (52) contient une lame de coupe (72) qui est actionnée séparément et est déplaçable pour l'essentiel de manière linéaire.

10. Dispositif d'abattage selon la revendication 9, caractérisé en ce que la lame de coupe (72) est actionnée pneumatiquement.

11. Dispositif d'abattage selon l'une des revendications 1 à 10, caractérisé en ce que la lame de coupe (72) est réalisée en forme de V et possède deux tranchants extérieurs (74).

12. Dispositif d'abattage selon la revendication 11, caractérisé en ce que chaque tranchant extérieur (74) de la lame de coupe (72) se termine par une pointe (76), en ce que ces pointes (76) sont disposées transversalement à la direction de déplacement de la lame de coupe (72) en étant écartées l'une de l'autre et forment entre elles une cavité (80) décalée vers l'arrière dont les bords intérieurs forment au moins partiellement un autre tranchant (82).

13. Dispositif d'abattage selon l'une des revendications 1 à 12, caractérisé en ce que la fente de capture (32) fait partie d'un chariot mobile linéairement dans lequel est réalisé d'un côté également l'évidement d'ajustage de la tête (62, 66) et sur lequel est articulé un levier pivotant (42) qui porte le dispositif de maintien du cou (50) et/ou le dispositif de coupe (52).

14. Dispositif d'abattage selon 1, une des revendications 1 à 13, caractérisé en ce que le dispositif de maintien du cou (50) est maintenu par un ressort (54).

15. Dispositif d'abattage selon l'une des revendications 1 à 14, caractérisé en ce que le dispositif de maintien du cou (50) s'engage, dans une position extrême de maintien, dans un évidement d'arrêt (60) d'une pièce formant la fente de capture (32).

# FIG. 1

FIG. 2

FIG. 5

FIG. 4

FIG. 6

# FIG. 3